# EUROPEAN PATENT SPECIFICATION

(11) **EP 3 156 702 B1**
(45) Date of publication and mention of the grant of the patent: **16.10.2019**
(21) Application number: 14894802.9
(22) Date of filing: 21.08.2014
(51) Int. Cl.: F16K 11/074, E21B 34/02, F16K 3/14, F16K 25/02

(54) **MULTI-WAY VALVE HAVING A VALVE SEAT RING**
MEHRWEGEVENTIL MIT VENTILSITZRING
CLAPET MULTIDIRECTIONNEL COMPORTANT UNE BAGUE DE SIÈGE DE CLAPET

(30) Priority: 10.06.2014 CN 201410256679
(43) Date of publication of application: 19.04.2017
(73) Proprietor: Kelamayi King-Bull Infortec Petroleum Equipment Co. Ltd, Xinjiang 834000 (CN)
(72) Inventor: WAN, Mingmin, Kelamayi Xinjiang 834000 (CN); YAO, Jianshe, Kelamayi Xinjiang 834000 (CN); GAO, Zhi, Kelamayi Xinjiang 834000 (CN); CHEN, Yunzhao, Kelamayi Xinjiang 834000 (CN); ZHU, Liyun, Kelamayi Xinjiang 834000 (CN)
(74) Representative: Patent- und Rechtsanwälte Dr. Solf & Zapf
(86) International application number: PCT/CN2014/084929
(87) International publication number: WO 2015/188452

(56) References cited:
- CN-A- 102 466 059
- CN-U- 201 588 945
- CN-U- 201 875 189
- CN-U- 203 036 009
- CN-U- 203 036 009
- CN-U- 204 025 764
- CN-Y- 201 034 178
- CN-Y- 201 034 178
- CN-Y- 201 173 313
- JP-A- H06 174 118
- NL-A- 7 607 014
- US-A- 2 840 109
- US-A- 2 996 083
- US-A- 2 996 083
- US-A- 4 989 641
- US-A1- 2005 046 114
- US-B1- 6 247 496

## Description

### Technical field

The invention relates to a valve seat ring on a multi-way valve of a petroleum, chemical engineering and natural gas metering station and a multi-way valve having the valve seat ring.

### Background of the invention

A multi-valve is generally used for taking turns metering single well production of the well, in order to obtain dynamic well production data. The valve core of the multi-way valve is provided with a valve seat ring, and the sealing surface of the valve seat ring is closely fitted with a sealing surface of the upper valve body. Currently, the sealing surface of the existing valve seat ring is welded / surfacing welded with cemented carbide or cermet, such as what is disclosed in the Chinese patent application ZL200420006528.1, Chinese patent application ZL200620167076.4 and Chinese patent application ZL200920291629.0.

In the normal operation of the multi-way valve, the valve seat ring makes circular motion around a shaft core of the valve core on the sealing surface of the upper valve body, and the sealing pressure ratio of the sealing surface of the valve seat ring to the sealing surface of the upper valve body is mainly provided by a disc spring, therefore, due to the limitations of the elastic force of the disc spring, the existing multi-way valve can only meet the requirement of internal sealing test under low differential-pressure (DP). When the testing differential-pressure (DP) between the gathering and transportation orifice and the metering orifice of a multi-way valve is up to 6.9 MPa, i.e., 1000 psi or even higher, it is far from meeting the leakage requirements of Leakage Level ANSI FCI-70.2 VI by providing the sealing pressure ratio only by the disc spring. Moreover, as for the structure of the traditional valve seat ring, the sealing band on sealing surface thereof is relatively wide, which results in that the force bearing area of the sealing is too large, and the power necessary to attain the sealing pressure ratio required by the sealing of Level VI is large. In this way, as the moment needed to be provided to drive the valve core to rotate becomes larger, especially under the working condition of high pressure, the larger the driving moment is, the larger the shaft diameter of the shaft core needed for transmitting the moment is, which is bad for the structural design of the valve body of the multi-way valve and it needs to select driving electronic assembly with higher power.

In addition, there are following related arts in the art:
US2005046114Adiscloses rotary seal member, assembly and methods for a hydraulic rotary swivel. The hydraulic rotary swivel includes a first part and a second part rotatable relative to each other. The rotary seal member is positioned between the first part and the second part and can be adapted to be securely retained in a corresponding retaining groove which may be formed in either one of the first part and the second part. In a preferred embodiment, the rotary seal member had an elongate body forming a ring, and has at least one protuberance formed along its length which fits into a cooperating depression formed along the retaining groove. In use, the protuberance and corresponding depression are coupled and cooperate to substantially prevent the rotary seal member from rotating within the retaining groove.

There are multi-way valve flat seal pair (see Chinese patent publication No. CN2709740Y) and the cylindrical seal sealing pair currently mainly used in the oil field industry. The rotary multi-way valve using planar sealing pair has the following structural features: a plurality of the flow channel inlet ports of circular cross section are provided uniformly in a planar circumference, when flow channel inlet port of a circular cross section has a large size (e.g., 3", 4" or 5"), the sealing pair multi-way valve having fan-shaped flow channel is used (see the Chinese utility model patent publication No. CN201034178Y), maintaining substantially consistence with the multi-way valve body using cylindrical seal pair in terms of size.

In view of the above problem, CN203036009U discloses a multiple-circuit valve which comprises an upper valve body, a lower valve body and rotation valve cores. An upper assembly hole for one rotation valve core to be installed is formed in the upper valve body. A lower assembly hole for the rotation valve core to be installed is formed in the lower valve body. The rotation valve core is arranged in the upper assembly hole and the lower assembly hole in a penetrating mode. An upper rolling bearing used for being assembled with the upper valve body is arranged on the rotation valve core at the upper assembly hole. A lower rolling bearing used for being assembled with the lower valve body is arranged on the rotation valve core at the lower assembly hole. The lower portion of the rotation valve core is arranged in the lower assembly hole and the upper end of the rotation valve core extends out of the upper assembly hole.

Chinese Utility Model Patent No. ZL200820035957.X discloses a liquefied gas cylinder valve, with a defect as follows: wear occurs easily between the rubber gasket 9-1 and 9-2 below the ring 7 and the sealing gasket 10-1 and 10-2 of wear resistant material occurs easily, which easily results in leakage after a long period of using, and thus affects the safety.

In order to deal with the above problem, CN201588945U relates to a pressure vessel valve, which comprises a new valve rod and an axle sleeve made of polytetrafluorethylene materials arranged on the new valve rod; a seal tray is arranged at the bottom of the new valve rod, a sharp side or a sharp surface adapted to form a seal matching with the bottom plane of the axle sleeve is provided an upper end surface of the seal tray.

In the multi-way valve currently used in the petroleum industry field, there are mainly two forms of the sealing pairs: planar sealing pair (see patent 200420006528.1), and a cylindrical sealing pair. Wherein, the structural features of the rotary multi-way valve using planar sealing pair are: a plurality of the flow channel inlet port of circular cross section are provided uniformly in a planar circumference, the sealing ring and the sealing pair of valve seat are made of cemented carbide material, it is easy to carry out plane grinding, the planar sealing pair seals reliably and have long working life.

Thus, CN201034178Y provides a multi-way valve with fan-shaped flow path sealing pair, on the basis of inheriting the advantage of the multi-way valve with planar sealing pair, also maintaining the size of the valve body substantially consistent with the size of the multi-way valve having cylindrical sealing pair, characterized in that: a floating gating ring and an upper porous plane body form a gating plane sealing pair; a plurality of fan-shaped flow channel oil inlet holes are annularly and uniformly distributed on a mating surface of the upper porous plane body; the floating gating ring is configured such that it changes gradually from the upper fan-shaped flow channel to the lower round-shaped flow channel; and when the middle rotary spool is rotated to a certain angle by means of (electrical or manual) power, the common flow-guide metering passage within the middle rotary spool is enabled to in communication with a certain fan-shaped flow channel oil inlet hole located in the mating surface of the upper porous plane body, so as to realize the rotary gating for measurement. An elastic force is applied in advance to the floating gating ring to make the sealing face self-sealed under a contact specific pressure.

Multi-port selector valves have been in use for many years in a variety of applications. Generally, as employed in oil fields where it is desired to isolate one of a plurality of incoming fluid streams for testing the volume and composition of the isolated stream, such valves comprise a valve body having circularly spaced apart inlet ports each of which receives fluid from a well head. US4989641A provides a multi-port selector valve internally supports a rotatable trunnion having an elbow passage between a nozzle portion of the trunnion and a lower end outlet that communicates with a test port of the valve body. The multi-port selector valve minimizes internal leakage and has a rotary nozzle member which can be positively indexed to a new test position and be rotated between inlet test ports by a small motor since there is no sliding friction between the nozzle inlet and the valve body.

US6247496B1 relates to a water diverting valve which mainly has a valve body, a valve control stem, an upper control valve unit and a lower control valve unit, a seal cap and a locking cap. The valve body and the valve control stem are integrally formed of plastics. The lower control valve unit is provided with oil reservoir cavities and oil grooves so as to permit the upper control valve unit and the lower control valve unit to be lubricantly engaged with each other in rotation. The flexible seal cap has tapered flange and a concentrically-ribbed bottom surface so that it can be better sealed in operation. The assembly of the diverting valve is simple and speedy and the operation thereof is smooth and durable.

US2996083A has to do with a rotary valve that is adapted to accommodate a plurality of fluid handling lines, and it is particularly concerned with a rotary valve handling flow of fluid through a plurality of lines and in communication with a main flow line that continuously handles the flow of, and a valve that is adapted to selectively communicate with any one of the first mentioned lines to connect said one line with a secondary flow line.

US2840109A relates to a rotary valve adapted to gather and merge the inflows from a plurality of fluid lines and to direct them to a common service outlet while simultaneously directing the inflow from an additional line to separated outlet, maintaining that flow segregated from the flow to the common outlet, thus providing for selectively sampling the fluid from any of the input lines in order to determine the characteristics thereof.

### Summary of the invention

In view of the above-mentioned problems existing in the prior art, the technical problem to be solved by the present invention is to provide a multi-way valve capable of realizing self-adaptive sealing by hydraulic pressure, so as to improve the internal sealing pressure ratio of the multi-way valve and meet the requirements for sealing level under high differential-pressure.

In order to solve the above technical problem, the present invention provides a multi-way valve according to claim 1.

Preferably, the cross-sectional shape of the oil incoming channel is circular in the multi-way valve, and the shapes of the first annular boss and the second annular boss are of an annular shape that adapts to the shape of the incoming oil channel.

Preferably, the cross-sectional shape of the horizontal section of the incoming oil channel is circular and the cross-sectional shape of the vertical section is of a fan-shape in the multi-way valve, wherein the shapes of the first annular boss and the second annular boss are of a fan shape that adapts to the cross-sectional shape of the vertical section of the incoming oil channel.

Preferably, the upper surface of the first annular boss is provided with at least one annular recess.

Preferably, there are 1 to 2 annular recesses.

Preferably, the cross-sectional shape of the annular recess is of a U-shape and the depth of the annular recess is 0.05mm to 0.2mm.

Preferably, the first annular boss and the second annular boss are integrally formed with the body.

Compared with the prior art, the valve seat ring of the present invention and the multi-way valve having the valve seat ring have the following advantages:
1. Since the valve seat ring of the present invention are additionally provided with the first annular boss and the second annular boss, when performing the internal sealing leakage test on the multi-way valve either by applying pressure to the chamber via the gathering and transportation orifice or by applying pressure to the incoming oil channel via the metering orifice, the liquid in the chamber generates an acting force acting on the lower surface of the first annular boss or the liquid in the incoming oil channel generates an acting force acting on the lower surface of the second annular boss, thus, an upward load hydraulically acting on the valve seat ring is formed, realizing hydraulic self-adaptability sealing for the valve seat ring and increasing the sealing pressure ratio of the valve seat ring.
2. Since the valve seat ring sealing surface of the valve seat ring of the present invention is provided with an annular recess, the area of the contact sealing between the upper valve body and the valve seat ring is reduced, and the sealing pressure ratio is increased, therefore, the shaft core moment is reduced, and under the condition that the sealing differential-pressure (DP) is 6.9 MPa / 1000 psi (or even higher), the valve seat ring attains the leakage level of ANSI FCI-70.2 VI. Besides, the depth of the annular recess on the sealing surface of the valve seat ring is controlled to be in the range of 0.05mm ∼ 0.2mm, and it does not contribute to the sealing area, moreover, the crude oil with high sediment concentration will not affect the rotating motion operation of the valve seat ring.
3. The multi-way valve of the present invention has a reasonable structure, smooth operation, reduced driving moment and meets the requirement of sealing level under high differential-pressure, broadening the application field of the multi-way valve of the high-pressure oil well or high pressure gas well plane hard seal.

### BRIEF DESCRIPTION OF THE DRAWINGS

Fig 1 is a plan view of a valve seat ring according to Embodiment 1 of the present invention.
Fig. 2 is a cross-sectional view taken along the line A-A in Fig. 1.
Fig. 3 is a longitudinal cross-sectional view of a multi-way valve having the valve seat ring according to Embodiment 1 of the present invention.
Fig. 4 is a plan view of a valve seat ring according to Embodiment 2 of the present invention.
Fig. 5 is a cross-sectional view taken along the line B-B of Fig. 4.
Fig. 6 is a longitudinal cross-sectional view of a multi-way valve having the valve seat ring according to Embodiment 2 of the present invention.

### Description of the Reference Numerals

| | |
|---|---|
| 1- upper valve body | 2- lower valve body |
| 3- rotary valve core | 4- chamber |
| 5 - incoming oil channel | 6 - metering orifice |
| 7- gathering and transportation orifice | 8- valve seat ring |
| 9 - first sealing surface | 10 - body |
| 11 - outer wall | 12 - inner wall |
| 13 - first annular boss | 14 - second annular boss |
| 15 - second sealing surface | 16 - annular gap |
| 17 - annular recess | 18 - through-hole |
| 19 - disc spring | |

### Detailed description

The invention will now be described in further detail with reference to the accompanying drawings and the specific embodiment, which should not be construed as limitations to the invention.

### Embodiment 1

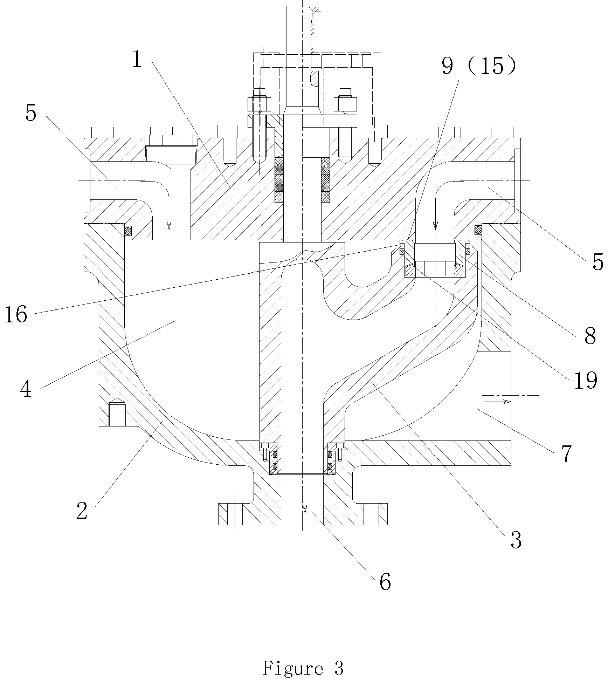

The valve seat ring of the embodiment of the present invention is applied to a multi-way valve. The cross-sectional shape at any position of an incoming oil channel of the multi-way valve in the present embodiment is circular. As shown in Fig. 3, the multi-way valve includes an upper valve body 1, a lower valve body 2, and a rotary valve core 3. The lower valve body 2 is provided with a chamber 4 therein, and the upper valve body 1 is provided with a plurality of incoming oil channels 5 which are penetrating into the chamber 4. The lower valve body 2 is provided with a metering orifice 6 and a gathering and transportation orifice 7, wherein the metering orifice 6 is able to communicate with the incoming oil channel 5 through a chamber in the rotary valve core 3, and the gathering and transportation orifice 7 communicates with the chamber 4. The valve seat ring 8 of the present embodiment is disposed in the rotary valve core 3 and clings to with a sealing surface of the upper valve body 1, and now the sealing surface of the upper valve body 1 is defined as the first sealing surface 9.

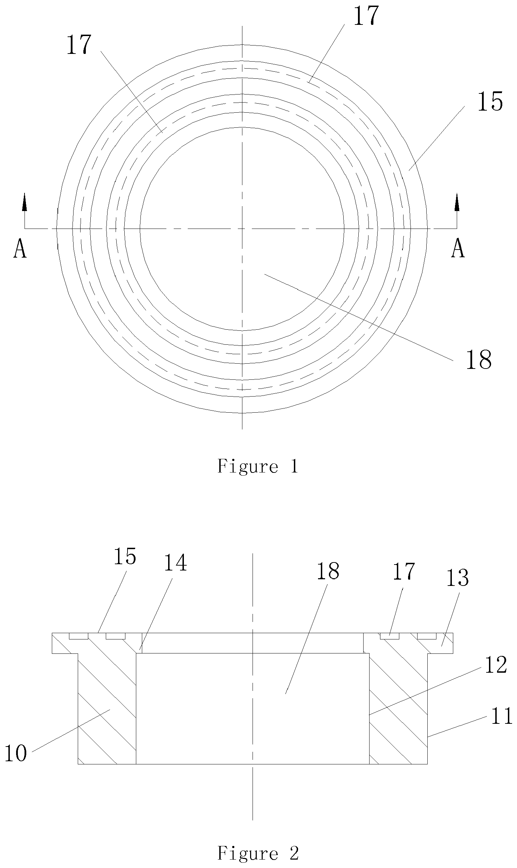

As shown in Figs. 1 and 2, the valve seat ring 8 of the embodiment of the present invention includes a cylindrical body 10 for fitting into the rotary valve core 3. The body 10 has a through-hole 18 penetrating in an axial direction thereof. A first annular boss 13 is arranged on an outer wall 11 of the body 10, while a second annular boss 14 is arranged on an inner wall 12 of the body 10; Both an upper surface of the first annular boss 13 and an upper surface of the second annular boss 14 are flush with an upper surface of the body 10 to form a second sealing surface 15 which clings to the first sealing surface 9 of the upper valve body 1 in a sealed manner; and an annular gap 16 is formed between a lower surface of the first annular boss 13 and the rotary valve core.

With continued reference to Fig.1, when a high pressure fluid is introduced into the chamber 4 via the gathering and transportation orifice 7 for internal sealing leakage test, the high pressure liquid in the chamber 4 acts on the lower surface of the first annular boss 13 so that an upward force is applied to the valve seat ring 8, and this acting force forms the sealing load of the valve seat ring 8 so as to realize the hydraulic adaptability for sealing the valve seat ring 8, thereby increasing the contact sealing pressure ratio of the valve seat ring 8 and thus meeting the requirement of sealing in the multi-way valve at the leakage level of sealing Level VI under a high differential-pressure. When the high pressure liquid is introduced into the incoming oil channel 5 via the metering orifice 6 for internal sealing leakage test, the high pressure liquid in the incoming oil channel 5 acts on the lower surface of the second annular boss 14, so that an upward force is applied to the valve seat ring 8, and this acting force forms the sealing load of the valve seat ring 8 so as to realize the hydraulic adaptability for sealing the valve seat ring 8, thereby increasing the contact sealing pressure ratio of the valve seat ring 8 and thus meeting the requirement of sealing in the multi-way valve at the leakage level of sealing level VI under a high differential-pressure. In this way, the adaptability for sealing the valve seat ring 8 is formed both in the direction from the gathering and transportation orifice 7 to the chamber 4 and the direction from the metering orifice 6 to the incoming oil channel 5, wherein when the differential-pressure (DP) between the gathering and transportation orifice 7 and the metering orifice 6 becomes larger increasingly, the sealing pressure ratio will become larger, and the sealing leakage will become smaller accordingly.

Since the cross-sectional shape of the incoming oil channel 5 of the multi-way valve in the present embodiment is circular, therefore, the shapes of the first annular boss 13 and the second annular boss 14 are circular, which adapts to the shape of the incoming oil channel 5, as shown in Figs. 1 and 2.

With continued reference to Figs 1 and 2, with the arrangement of the first annular boss 13, a sealing contact area between the first sealing surface 9 and the second sealing surface 15 increases, i.e., the sealing annular band is relatively wide. This will result in a relatively large rotational moment for driving the rotary valve core 3. Therefore, as shown in Figs. 1 and 2, the upper surface of the first annular boss 13 is provided with at least one annular recess 17 and it does not contribute to the sealing area so as to reduce the sealing contact area. The number and the width of the annular recess 17 should be determined in accordance with the area of the upper surface of the first annular boss 13. If the area of the upper surface is large, the number of the annular recess 17 should increase correspondingly, and vice versa. Normally, the sealing contact area between the first sealing surface 9 and the second sealing surface 15 should be made to correspond to the sealing contact area of a traditional low pressure multi-way valve, in order to ensure that the rotational moment for driving the rotary valve core 3 is not too large. In this embodiment, two annular recesses 17 are provided.

As a further preferred embodiment of the present embodiment, the cross-sectional shape of the annular recess 17 is of a U-shape, and the depth of the annular recess 17 is 0.05mm to 0.2mm. Since the depth of the annular recess 17 is relatively small, the sand particles in crude oil with high sediment concentration do not remain in the annular recess 17, thereby not affecting the rotary motion operation of the valve seat ring 8.

### Embodiment 2

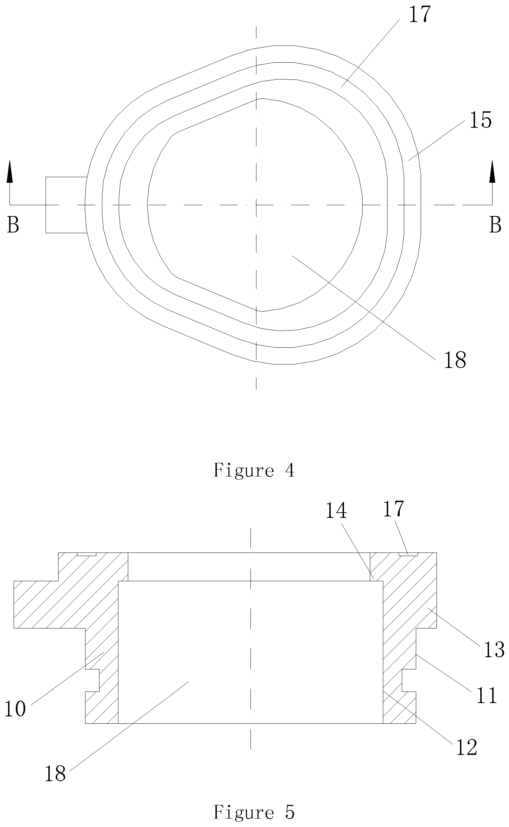

The principle of the present embodiment is completely the same as that of the Embodiment 1 except the following difference: because the multi-way valves employed are different, the cross-sectional shape of the horizontal section (the section for connecting with a single well) of the incoming oil channel 5 of the multi-way valve of the present embodiment is circular, while the cross-sectional shape of the vertical section (the section for docking with the rotary valve core 3) has a fan shape. In order to adapt to the vertical section of the incoming oil channel 5 of the multi-way valve, the shapes of the first annular boss 13 and the second annular boss 14 are different from that of Embodiment 1. As shown in Figs. 4 and 5, the body 10 of the valve seat ring 8 of the present embodiment is also of a cylindrical shape as in Embodiment 1, and has a penetrating through-hole 18, wherein the body 10 is for mating with the rotary valve core 3. Both the first annular boss 13 and the second annular boss 14 are of fan shapes which adapt to the cross-sectional shape of the vertical section of the incoming oil channel 5, such as, a fan-shape similar to a cattail leaf fan, as shown in Fig. 4.

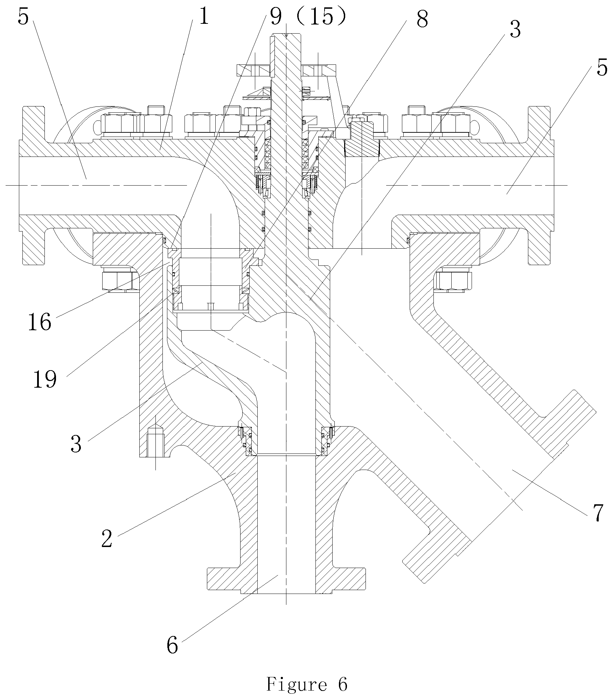

The present invention also discloses a multi-way valve as shown in Figs. 3 and 6, including an upper valve body 1, a lower valve body 2, a rotary valve core 3, and the valve seat ring 8 as described above. A chamber 4 is provided in the lower valve body 2, and a plurality of incoming oil channels 5 penetrating into the chamber 4 are provided in the upper valve body 1. A body 10 of the valve seat ring 8 is arranged in the rotary valve core 3, and the second sealing surface 15 of the valve seat ring 8 clings to the first sealing surface 9 of the upper valve body 1 in a sealed manner.

Since the internal sealing differential-pressure (DP) required by the traditional low pressure multi-way valve is relatively low, it is sufficient to provide the sealing pressure ratio of the valve seat ring 8 to the upper valve body 1 by the disc spring 19 below the valve seat ring. As for the internal sealing of a high-end high-pressure multi-way valve, when the internal sealing differential-pressure (DP) reaches 6.9MPa / 1000psi (or even higher), providing the sealing pressure ratio of the valve seat ring 8 to the upper valve body 1 only by the disc spring 19 below the valve seat ring is not enough to meet the leakage level of level VI. In the present invention, by changing the structure of the valve seat ring 8, with the hydraulically acting force in the chamber 4 or the incoming oil channel 5, sealing load hydraulically acting on the valve seat ring 8 is formed, thus, the hydraulic self-adaptability sealing of the valve seat ring 8 is realized, and the contact sealing pressure ratio of the valve seat ring 8 is increased, thereby meeting the requirement for internal sealing of high pressure multi-way valve at the leakage level of sealing level VI under a high differential-pressure (DP). Therefore, the valve seat ring 8 of the present invention has a reasonable design on structure, which improves the sealing level under a high differential-pressure (DP), reduces the driving moment of the rotary valve core 3, reduces the power of the selected driving electronic assembly, and broadens high pressure application field of the high-pressure oil well or high pressure gas well plane hard seal multi-way valve.

The above embodiments are merely exemplary embodiments of the present invention and are not intended to limit the invention, while the protection scope is defined by the claims. Various modifications or equivalent substitutions may be made to the invention within the scope of the invention by those skilled in the art, and such modifications and equivalent substitutions should be considered as being within the scope of the invention as solely defined by the appended claims.

## Claims

1. A multi-way valve comprising an upper valve body (1), a lower valve body (2), and a rotary valve core (3), the lower valve body (2) is provided with a chamber (4) therein, the upper valve body (1) is provided with a plurality of incoming oil channels (5) which penetrate into the chamber (4),wherein,
the multi-way valve further comprises a valve seat ring (8), wherein the valve seat ring (8) includes a cylindrical body (10), and the cylindrical body (10) has a through-hole (18), which penetrates in an axial direction thereof and is able to be communicated with the incoming oil channel (5), wherein a first annular boss (13) is arranged on an outer wall (11) of the cylindrical body (10), and a second annular boss (14) is arranged on an inner wall (12) of the cylindrical body (10); both an upper surface of the first annular boss (13) and an upper surface of the second annular boss (14) are flush with an upper surface of the cylindrical body (10) to form a sealing surface (15), wherein the cylindrical body (10) of the valve seat ring (8) is arranged in the rotary valve core (3) and the sealing surface (15) of the valve seat ring (8) clings to a sealing surface (9) of the upper valve body (1) in a sealed manner, wherein liquid in the incoming oil channel (5) acts on the lower surface of the second annular boss (14) of the valve seat ring (8) to form a sealing load,
the multi-way valve being **characterized in that**
an annular gap (16) is formed between a lower surface of the first annular boss (13) of the valve seat ring (8) and the rotary valve core (3), so that liquid in the chamber (4) acts on the lower surface of the first annular boss (13) to form a sealing load.

2. The multi-way valve according to claim 1, wherein, the cross-sectional shape of the oil incoming channel (5) is circular in the multi-way valve, and the shapes of the first annular boss (13) and the second annular boss (14) are of an annular shape that adapts to the shape of the incoming oil channel (5).

3. The multi-way valve according to claim 1, wherein, the cross-sectional shape of a horizontal section of the incoming oil channel (5) is circular and the cross-sectional shape of a vertical section of the incoming oil channel (5) is of a fan-shape in the multi-way valve, wherein the shapes of the first annular boss (13) and the second annular boss (14) are of a fan shape that adapts to the cross-sectional shape of the vertical section of the incoming oil channel (5).

4. The multi-way valve according to any one of claims 1 to 3, wherein, the upper surface of the first annular boss (13) is provided with at least one annular recess (17).

5. The multi-way valve according to claim 4, wherein, there are 1 to 2 annular recesses (17).

6. The multi-way valve according to claim 4 or 5, wherein, the cross-sectional shape of the annular recess (17) is of a U-shape and the depth of the annular recess (17) is 0.05mm to 0.2mm.

7. The multi-way valve according to any one of claims 1 to 6, wherein, the first annular boss (13) and the second annular boss (14) are integrally formed with the cylindrical body (10).

## Patentansprüche

1. Mehrwegeventil, das einen oberen Ventilkörper (1), einen unteren Ventilkörper (2) und einen Drehventilkern (3) umfasst, wobei der untere Ventilkörper (2) mit einer Kammer (4) darin versehen ist, wobei der obere Ventilkörper (1) mit mehreren Öleingangskanälen (5) versehen ist, die in die Kammer (4) eintreten, wobei das Mehrwegeventil ferner einen Ventilsitzring (8) umfasst, wobei der Ventilsitzring (8) einen zylindrischen Körper (10) aufweist, und der zylindrische Körper (10) eine Durchgangsöffnung (18) aufweist, die in axialer Richtung dessen dort hindurch verläuft und mit dem Öleingangskanal (5) verbunden werden kann, wobei ein erster ringförmiger Vorsprung (13) an einer Außenwand (11) des zylindrischen Körpers (10) angeordnet ist und ein zweiter ringförmiger Vorsprung (14) an einer Innenwand (12) des zylindrischen Körpers (10) angeordnet ist; wobei sowohl eine obere Fläche des ersten ringförmigen Vorsprungs (13) als auch eine obere Fläche des zweiten ringförmigen Vorsprungs (14) mit einer oberen Fläche des zylindrischen Körpers (10) bündig ist, um eine Dichtungsfläche (15) auszubilden, wobei der zylindrische Körper (10) des Ventilsitzrings (8) im Drehventilkern (3) angeordnet ist und die Dichtungsfläche (15) des Ventilsitzrings (8) an einer Dichtungsfläche (9) des oberen Ventilkörpers (1) dichtend anhaftet, wobei eine Flüssigkeit im Öleingangskanal (5) auf die untere Fläche des zweiten ringförmigen Vorsprungs (14) des Ventilsitzrings (8) wirkt, um eine Dichtlast auszubilden, wobei das Mehrwegeventil
**dadurch gekennzeichnet ist, dass**
ein ringförmiger Spalt (16) zwischen einer unteren Fläche des ersten ringförmigen Vorsprungs (13) des Ventilsitzrings (8) und dem Drehventilkern (3) ausgebildet ist, sodass Flüssigkeit in der Kammer (4) auf die untere Fläche des ersten ringförmigen Vorsprungs (13) wirkt, um eine Dichtlast auszubilden.

2. Mehrwegeventil nach Anspruch 1, wobei die Querschnittsform des Öleingangskanals (5) im Mehrwegeventil kreisförmig ist und der erste ringförmige Vorsprung (13) und der zweite ringförmige Vorsprung (14) eine Ringform aufweisen, die sich an die Form des Öleingangskanals (5) anpasst.

3. Mehrwegeventil nach Anspruch 1, wobei die Querschnittsform eines horizontalen Abschnitts des Öleingangsventils (5) kreisförmig ist und die Querschnittsform eines vertikalen Abschnitts des Öleingangskanals (5) im Mehrwegeventil fächerförmig ist, wobei der erste ringförmige Vorsprung (13) und der zweite ringförmige Vorsprung (14) eine Fächerform aufweisen, die sich an die Querschnittsform des vertikalen Abschnitts des Öleingangskanals (5) anpasst.

4. Mehrwegeventil nach einem der Ansprüche 1 bis 3, wobei die obere Fläche des ersten ringförmigen Vorsprungs (13) mit mindestens einer ringförmigen Aussparung (17) versehen ist.

5. Mehrwegeventil nach Anspruch 4, wobei 1 bis 2 ringförmige Aussparungen (17) vorhanden sind.

6. Mehrwegeventil nach Anspruch 4 oder 5, wobei die Querschnittsform der ringförmigen Aussparung (17) U-förmig ist und die Tiefe der ringförmigen Aussparung (17) 0,05 mm bis 0,2 mm beträgt.

7. Mehrwegeventil nach einem der Ansprüche 1 bis 6, wobei der erste ringförmige Vorsprung (13) und der zweite ringförmige Vorsprung (14) mit dem zylindrischen Körper (10) einstückig ausgebildet sind.

## Revendications

1. Clapet multidirectionnel comprenant un corps de clapet supérieur (1), un corps de clapet inférieur (2) et une pièce intérieure de clapet rotative (3), le corps de clapet inférieur (2), est pourvu d'une chambre (4) à l'intérieur, le corps de clapet supérieur (1) est pourvu d'une pluralité de canaux d'huile entrants (5) qui pénètrent dans la chambre (4), dans lequel le clapet multidirectionnel comprend en outre une bague de siège de clapet (8), dans lequel la bague de siège de clapet (8) comprend un corps cylindrique (10), et le corps cylindrique (10) présente un trou traversant (18), qui pénètre dans sa direction axiale et est capable d'entrer en communication avec le canal d'huile entrant (5), dans lequel un premier bossage annulaire (13) est agencé sur une paroi externe (11) du corps cylindrique (10), et un second bossage annulaire (14) est agencé sur une paroi interne (12) du corps cylindrique (10) ; une surface supérieure du premier bossage annulaire (13) et une surface supérieure du second bossage annulaire (14) affleurent toutes les deux avec une surface supérieure du corps cylindrique (10) pour former une surface d'étanchéité (15), dans lequel le corps cylindrique (10) de la bague de siège de clapet (8) est disposé dans la pièce intérieure de clapet rotative (3) et la surface d'étanchéité (15) de la bague de siège de clapet (8) s'accroche à une surface d'étanchéité (9) du corps de clapet supérieur (1) de manière étanche, dans lequel du liquide dans le canal d'huile entrant (5) agit sur la surface inférieure du second bossage annulaire (14) de la bague de siège de clapet (8) pour former une charge d'étanchéité,
le clapet multidirectionnel étant **caractérisé en ce qu'**une fente annulaire (16) est formée entre une surface inférieure du premier bossage annulaire (13) de la bague de siège de clapet (8) et la pièce intérieure de clapet rotative (3), de sorte que du liquide dans la chambre (4) agit sur la surface inférieure du premier bossage annulaire (13) pour former une charge d'étanchéité.

2. Clapet multidirectionnel selon la revendication 1, dans lequel la forme en coupe transversale du canal d'arrivée d'huile (5) est circulaire dans le clapet multidirectionnel, et les formes du premier bossage annulaire (13) et du second bossage annulaire (14) ont une forme annulaire qui s'adapte à la forme du canal d'huile entrant (5).

3. Clapet multidirectionnel selon la revendication 1, dans lequel la forme en coupe transversale d'une section horizontale du canal d'huile entrant (5) est circulaire et la forme en coupe transversale de la section verticale du canal d'huile d'arrivée (5) est d'une forme en éventail dans le clapet multidirectionnel, dans lequel les formes du premier bossage annulaire (13) et du second bossage annulaire (14) ont une forme en éventail qui s'adapte à la forme en coupe transversale de la section verticale du canal d'huile entrant (5).

4. Clapet multidirectionnel selon l'une quelconque des revendications 1 à 3, dans lequel la surface supérieure du premier bossage annulaire (13) est munie d'au moins une gorge annulaire (17).

5. Clapet multidirectionnel selon la revendication 4, dans lequel il y a 1 à 2 gorges annulaires (17).

6. Clapet multidirectionnel selon la revendication 4 ou 5, dans lequel la forme en coupe transversale de la gorge annulaire (17) est en forme de U et la profondeur de la gorge annulaire (17) est comprise entre 0,05 mm et 0,2 mm.

7. Clapet multidirectionnel selon l'une quelconque des revendications 1 à 6, dans lequel le premier bossage annulaire (13) et le second bossage annulaire (14) sont formés d'un seul tenant avec le corps cylindrique (10).
